# EUROPEAN PATENT SPECIFICATION

(11) **EP 4 525 260 B1**
(45) Date of publication and mention of the grant of the patent: **13.05.2026**
(21) Application number: 24172716.3
(22) Date of filing: 26.04.2024
(51) Int. Cl.: H02J 7/00

(54) **METHOD AND APPARATUS FOR CHANGING SETTING VALUE OF BATTERY PACK, AND RECORDING MEDIUM STORING COMPUTER PROGRAM TO EXECUTE THE METHOD**
VERFAHREN UND VORRICHTUNG ZUR ÄNDERUNG DES SOLLWERTS EINES BATTERIEPACKS UND AUFZEICHNUNGSMEDIUM MIT DARAUF GESPEICHERTEM COMPUTERPROGRAMM ZUR AUSFÜHRUNG DES VERFAHRENS
PROCÉDÉ ET APPAREIL DE CHANGEMENT DE VALEUR DE RÉGLAGE DE BLOC-BATTERIE, ET SUPPORT D'ENREGISTREMENT STOCKANT UN PROGRAMME INFORMATIQUE POUR EXÉCUTER LE PROCÉDÉ

(30) Priority: 15.09.2023 KR 20230123129
(43) Date of publication of application: 19.03.2025
(73) Proprietor: Samsung SDI Co., Ltd., Yongin-si, Gyeonggi-do 17084 (KR)
(72) Inventor: Sim, Sesub, 17084 Yongin-si, Gyeonggi-do (KR)
(74) Representative: Gulde & Partner

(56) References cited:
- WO-A1-2022/113354
- US-A1- 2020 251 917
- US-A1- 2021 402 954
- US-A1- 2024 022 085

## Description

### BACKGROUND

### 1. Field

The present invention relates to a method and apparatus for changing a setting value of a battery pack, and a recording medium storing a computer program to execute the method.

### 2. Description of the Related Art

Recently, desire for portable electronic products, such as laptops, video cameras, portable phones, etc., have increased rapidly. Also, as the development of energy storage batteries, robots, satellites, etc., is rapidly advancing, research on high-performance secondary batteries that can be repeatedly charged and discharged has been actively pursued.

Current commercial secondary batteries include nickel cadmium batteries, nickel hydrogen batteries, nickel zinc batteries, lithium secondary batteries, etc. Among these batteries, lithium secondary batteries have been highlighted because they are charged and discharged freely with a little memory effect, as compared to nickel-based secondary batteries, and also have very low self-discharge rate and high energy density.

Batteries including the above-described secondary batteries are used for various sets, such as vehicles, small cleaners, electronic bikes (e-bikes), etc. A protective-operation-setting value of a battery pack included in a set, for example, a setting value for a usage condition, such as an output, etc., are fixed at the time of development of battery packs, and are recorded on battery management systems (BMSs). The battery packs operate based on the recorded values. If an operating condition for a new set changes, such as where an existing battery pack is used in a new set, a battery pack for the new set may be suitably newly developed.

US 2021/0402954 A1 relates to using authentication via a short-range wireless connection to manage communication between a BMS and a host platform (e.g., vehicle) and energy flow between battery and host platform. US 2020/0251917 A1 discloses a method of connecting a main device (e.g., vehicle or tool) to a server via a battery module that powers the main device. WO 2022/113354 A1 relates to a management system that manages a battery that is detachably mounted on a device, and a battery.

### SUMMARY

The present invention, as defined by the independent claims, relates to a method and apparatus for changing a setting value of a battery pack, and a recording medium storing a computer program to execute the method.

Preferred embodiments of the invention are defined in the dependent claims and will be set forth in part in the description.

According to the invention, a method of changing a setting value of a battery pack provided in a set includes obtaining, by a battery management system (BMS) of the battery pack, a first authentication key from the set, authenticating, by the BMS, the set based on the first authentication key, changing, by the BMS, a setting value for an operation of the battery pack with a value based on whether the set is authenticated, receiving, by the BMS, a second authentication key requesting a change of the setting value from the set, and changing, by the BMS, the setting value based on a change request value received from the set in response to whether the second authentication key is identified, wherein the changing of the setting value based on the change request value comprises: determining whether the change request value is within a range between a minimum value and a maximum value of the setting value, and changing the setting value if the change request value is within the range.

The authenticating of the set may include identifying the first authentication key indicating mutual authentication between the set and the BMS, and identifying the set based on the first authentication key.

The changing of the setting value may include identifying the first authentication key, and changing, by the BMS, the setting value with a user value corresponding to the set, or failing to identify the first authentication key, and changing, by the BMS, the setting value with a default value.

The method includes receiving, by the BMS, a second authentication key requesting a change of the setting value from the set, and changing, by the BMS, the setting value based on a change request value received from the set in response to whether the second authentication key is identified.

The changing of the setting value based on the change request value includes determining whether the change request value is within a range between a minimum value and a maximum value of the setting value, and changing the setting value if the change request value is within the range.

The changing of the setting value based on the change request value may further include updating a user value corresponding to the set with the change request value.

The invention also provides a recording medium having recorded thereon a computer program to execute on a computing device the method.

According to the invention, an apparatus for changing a setting value of a battery pack provided in a set includes a battery management system (BMS) of the battery pack that is configured to obtain a first authentication key from the set, to authenticate the set based on the first authentication key, and to change the setting value for an operation of the battery pack with a value based on whether the set is authenticated, to receive a second authentication key requesting a change of the setting value from the set, to change the setting value based on a change request value received from the set in response to whether the second authentication key is identified, to determine whether the change request value is within a range between a minimum value and a maximum value of the setting value, and to change the setting value if the change request value is within the range.

The BMS may be further configured to identify the first authentication key indicating mutual authentication between the set and the BMS, and to identify the set based on the first authentication key.

The BMS may be further configured to identify the first authentication key and change the setting value with a user value corresponding to the set, or to fail to identify the first authentication key and change the setting value with a default value.

The BMS is configured to receive a second authentication key requesting a change of the setting value from the set, and to change the setting value based on a change request value received from the set in response to whether the second authentication key is identified.

The BMS is configured to determine whether the change request value is within a range between a minimum value and a maximum value of the setting value, and to change the setting value if the change request value is within the range.

The BMS may be further configured to update a user value corresponding to the set with the change request value.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other aspects of certain embodiments will be more apparent from the following description taken in conjunction with the accompanying drawings, in which:
FIG. 1 schematically shows a battery pack and a battery management system (BMS) included in a set, according to embodiments of the disclosure;
FIG. 2 is a block diagram schematically showing components of a BMS according to embodiments of the disclosure;
FIG. 3 is a block diagram schematically showing values included in a memory according to embodiments of the disclosure;
FIG. 4 is a flowchart of a method of changing a battery-setting value, according to embodiments of the disclosure;
FIGS. 5 to 7 are views for describing a method of changing a battery-setting value, according to embodiments of the disclosure; and
FIG. 8 is a flowchart of a method of changing a battery-setting value, according to other embodiments of the disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Some examples may be described with functional block configurations and various processing operations. Some or all of the functional blocks may be implemented with various numbers of hardware and/or software configurations. For example, the functional blocks of the disclosure may be implemented by one or more microprocessors or circuit configurations for certain functions. The functional blocks of the disclosure may be implemented with various programming or scripting languages. The functional blocks of the disclosure may be implemented as an algorithm executed on one or more processors. A function performed by a functional block of the disclosure may be performed by a plurality of functional blocks, or functions performed by a plurality of functional blocks may be performed by one functional block in the disclosure. Moreover, the disclosure may employ related art for electronic environment setting, signal processing, and/or data processing, etc.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

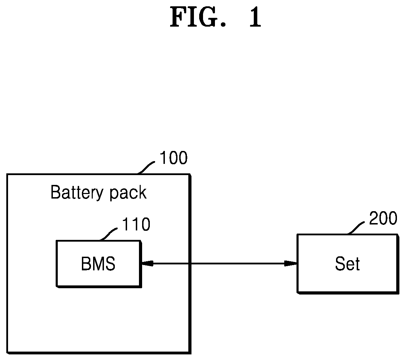

FIG. 1 schematically shows a battery pack and a battery management system (BMS) included in a set, according to embodiments of the disclosure. For example, as shown in FIG. 1, a battery pack 100 according to embodiments of the disclosure may be a battery pack included in a set 200. For example, the set 200 may be a device having mounted thereon the battery pack, such as a small cleaner (e.g., vacuum cleaner), an electronic-bike (e-bike), a vehicle, etc.

Referring to FIG. 1, an apparatus for changing a battery-setting value according to embodiments of the disclosure may include a BMS 110. The apparatus for changing a battery-setting value according to embodiments of the disclosure may include the BMS 110 included in the battery pack 100 provided in the set 200.

Depending on operating specifications of the set 200, a setting value of the battery pack 100 that is suitable for the battery pack 100 (e.g., a protective-operation-setting value, an output value, etc.) may be set differently. The battery pack 100 may have different setting values depending on the operating specifications of the set 200. For example, the battery pack 100 may include at least one battery cell that may be a chargeable secondary battery. For example, the battery cell may include at least one selected from a group including a nickel-cadmium battery, a lead acid battery, a nickel metal hydride battery (NiMH), a lithium ion battery, a lithium polymer battery, etc. In one or more embodiments, the apparatus for changing a battery-setting value may further include a switch, a battery protection circuit, a fuse, a current sensor, a temperature sensor, etc., in addition to the BMS 110.

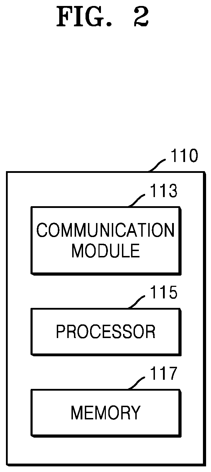

FIG. 2 is a block diagram schematically showing components of a BMS according to embodiments of the disclosure.

Referring to FIG. 2, the BMS 110 according to embodiments of the disclosure may include a communication module 113, a processor 115, and a memory 117.

The processor 115 may control an operation of changing a setting value of a battery pack. For example, the processor 115 may change a setting value for an operation of the battery pack with a value (e.g., preset value) based on whether a set for the battery pack is authenticated.

For example, the processor 115 may be implemented in the form selectively including a processor, an application-specific integrated circuit (ASIC), another chipset, a logic circuit, a register, a communication modem, and/or a data processing device, etc., to perform the above-described operation of the BMS 110. The processor 115 may perform basic arithmetic, logic, and input/output operations, and may execute a program code stored in, for example, the memory 117. The processor 115 may store data in the memory 117 or may load data stored in the memory 117.

The memory 117 may include a permanent mass storage device, such as random access memory (RAM), read only memory (ROM), or a disk drive, as a recording medium that is readable by the processor 115. The memory 117 may store an operating system and at least one program or application code. The memory 117 may store program code and data for a method of changing a battery-setting value, according to embodiments of the disclosure.

The BMS 110 may further include the communication module 113. For example, as shown in FIGS. 1 and 2, the BMS 110 may exchange data with the set 200 by using the communication module 113.

A communication scheme of the communication module 113 is not particularly limited, and may include short-range wireless communication between devices, as well as communications using a communication network (e.g., a mobile communication network, wired Internet, wireless Internet, a broadcast network, etc.). For example, the network may include one or more networks among a personal area network (PAN), a local area network (LAN), a campus area network (CAN), a metropolitan area network (MAN), a wide area network (WAN), a broadband network (BBN), Internet, etc. Moreover, the network may include, but is not limited to, one or more of network topology including a bus network, a start network, a ring network, a mesh network, a star-bus network, a tree or hierarchical network, etc.

The apparatus for changing a battery-setting value according to the disclosure may include an input/output interface. The input/output interface may be a means for an interface with an input/output device. For example, the input device may include a keyboard, a mouse, etc., and the output device may include a display for displaying a communication session of an application, etc. In one or more embodiments, the input/output interface may be a means for an interface with a device in which a function for input and a function for output are integrated into one, such as a touch screen.

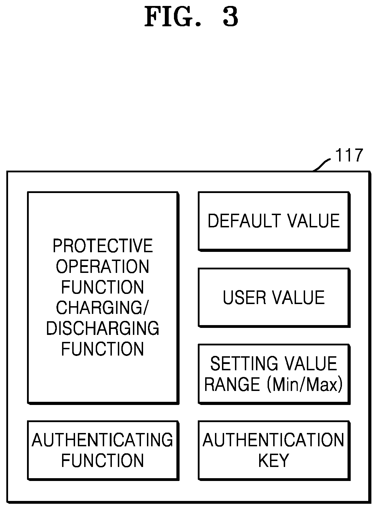

FIG. 3 is a block diagram schematically showing values included in a memory according to embodiments of the disclosure.

Referring to FIG. 3, the memory 117 according to embodiments of the disclosure may include a setting value of a protective operation function of a battery pack, a setting value of a charging/discharging function, and an authentication key of an authenticating function. For example, as shown in FIG. 3, the memory 117 according to embodiments of the disclosure may include a default value (Default), a user value (User), a minimum value (Min), and a maximum value (Max) (e.g., the minimum value and the maximum value may indicate a range of the setting value) for the setting value of the protective operation function of the battery pack.

The memory 117 may include a default value (Default), a user value (User), a minimum value (Min), and/or a maximum value (Max) for a setting value of the charging/discharging function of the battery pack. The memory 117 may include an authentication key of the authenticating function of the battery pack. For example, the authenticating function of the battery pack may include a function of authenticating a set having been set with a setting value (e.g., preset setting value), and a function of authenticating a request for changing the setting value of the battery pack.

The authentication key according to embodiments of the disclosure may include a first authentication key and a second authentication key. For example, the first authentication key may indicate an authentication key that performs mutual authentication between the set and the BMS. The second authentication key may indicate an authentication key that performs authentication of whether the set is authorized to change a setting value of the BMS. For example, the authentication key may indicate data according to an encryption scheme between the set and the BMS (e.g., a secure hash algorithm (SHA), an elliptic curve cryptosystem (ECC), etc.).

For example, if the battery pack included in the set wakes up in a state of being connected to the set, the first authentication key may be transmitted to the BMS from the set. In one or more embodiments, the first authentication key may be transmitted from the BMS to the set. The second authentication key may be transmitted from the set to the BMS. For example, the second authentication key may be encryption data including the first authentication key and password data. In one or more embodiments, the second encryption key transmitted from the set may undergo a decryption process in the BMS so as to be decrypted using the first authentication key and the password data, and if this value is correct, the BMS may enter a setting change mode to change the setting value of the battery pack with a value transmitted from the set.

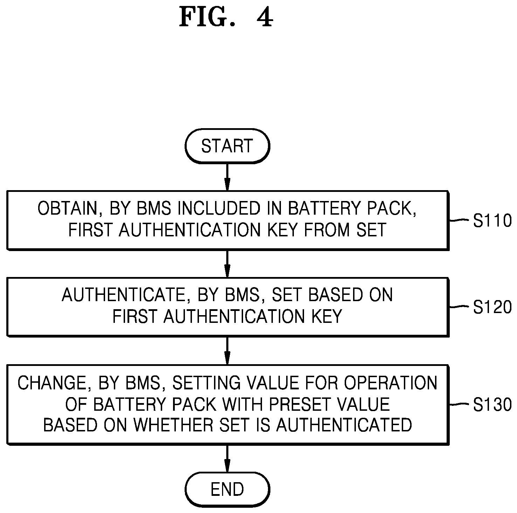

FIG. 4 is a flowchart of a method of changing a battery-setting value, according to embodiments of the disclosure.

Referring to FIG. 4, a flowchart of a method of changing a setting value of a battery pack provided in a set according to embodiments of the disclosure is shown.

In operation S110, the BMS included in the battery pack may obtain the first authentication key from the set. For example, the battery pack may obtain the first authentication key from the set after the battery is powered on. The battery pack may transmit data requesting the first authentication key to the set after the battery pack is powered on. The battery pack may transmit the first authentication key to the set.

In operation S120, the BMS may authenticate the set based on the first authentication key. For example, the BMS may authenticate the set based on the first authentication key received from the set. For example, the first authentication key may be preset for a different set.

The BMS according to embodiments of the disclosure may identify the first authentication key indicating mutual authentication between the set and the BMS. The BMS may identify the set based on the first authentication key. For example, the BMS may identify a set A based on the first authentication key corresponding to the set A.

In operation S130, the BMS may change a setting value for an operation of the battery pack with a value (e.g., preset value) based on whether the set is authenticated. For example, if the BMS authenticates the set A based on the first authentication key, the BMS may change the setting value for the operation of the battery pack with a setting value (e.g., preset setting value) corresponding to the set A.

The BMS according to embodiments of the disclosure may change the setting value of the battery pack with a user value (e.g., preset user value) (User) corresponding to the set (e.g., if identifying the first authentication key). The BMS may change the setting value of the battery pack with a default value (e.g., preset default value) Default (e.g., if failing to identify the first authentication key).

The BMS according to embodiments of the disclosure may receive the second authentication key requesting a change of the setting value of the battery pack from the set. The BMS may change the setting value of the battery pack based on a change request value received from the set in response to whether the second authentication key is identified. For example, the BMS may change the setting value (e.g., preset setting value) in response to the set A based on the second authentication key.

The BMS according to embodiments of the disclosure may identify whether the change request value is within a range between the minimum value Min and the maximum value Max of the setting value (e.g., preset setting value). If the change request value is within the range between the minimum value and the maximum value of the setting value (e.g., preset setting value), the BMS may change the setting value of the battery pack. The BMS according to embodiments of the disclosure may update a user value (e.g., preset user value) corresponding to the set with the change request value.

As an example of changing the setting value of the battery pack, the BMS may change a setting value of a protective operation condition (e.g., over-temperature protection, undervoltage protection, over-current protection, etc.) of the battery pack according to a discharging condition (e.g., a discharge power or a discharge current) of the battery pack. For example, due to characteristics of a cell, the cell discharged with a high power may undergo a temperature rise because heat inside the cell continues to radiate even if discharge is stopped. Thus, in a high-power mode, an over-temperature protection level may be suitably lower than in a low power mode.

The BMS according to embodiments of the disclosure may obtain ranges of temperature and time conditions of over-temperature protection from a discharge power for requesting a change of a setting value in a set, and may compare the obtained ranges with temperature and time conditions of over-temperature protection to be set in the set, thus reflecting the change of the setting value if a comparison result is within an allowable error, and not changing the setting value otherwise. For example, an end-of-discharge condition may differ with a discharge power (3.0V @ Low, 2.8V @ High), and, in one or more embodiments, the BMS may obtain a range of the end-of-discharge condition from the discharge power to be set in the set, and may compare the range of the end-of-discharge condition with an end-of-discharge condition for which the change of the setting value is to be requested in the set, thus reflecting the change of the setting value if a comparison result is within an allowable error, and not changing the setting value otherwise. A protective operation condition for which the setting value is to be changed may include inter-connection between current protection and over-temperature protection, current protection due to a charge current, charge time protection, etc.

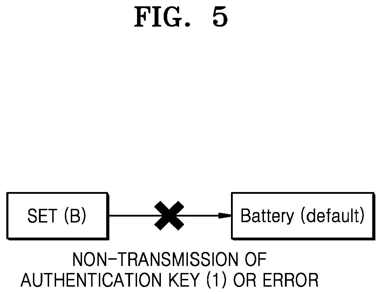

FIGS. 5 to 7 are views for describing a method of changing a battery-setting value, according to embodiments of the disclosure.

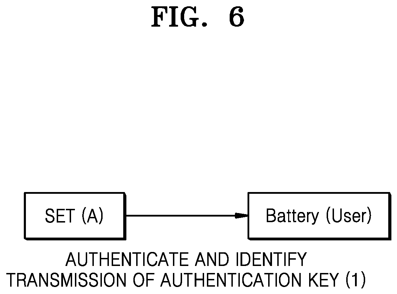

The battery pack according to embodiments of the disclosure may have setting values (e.g., Min, Max, Default, User) that may be changed by setting of the set. For example, as shown in FIG. 5, if the BMS, after being powered on, fails to receive the first authentication key corresponding to the set A from the set, or receives a wrong value from the set, the battery pack may operate with a default value (e.g., preset default value) (Default). For example, as shown in FIG. 6, if the BMS receives the first authentication key corresponding to the set A from the set A, the battery pack may operate with a user value (e.g., preset user value) (User) for the set A.

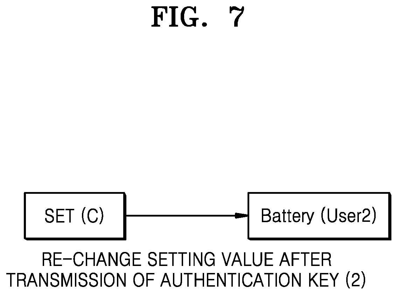

If the BMS according to embodiments of the disclosure receives the second authentication key requesting a change of the setting value from the set after the battery pack is powered on, the BMS may identify the second authentication key, and then may perform a process of changing a setting value. For example, as shown in FIG. 7, if a change request value User2 received from the set is within a setting value range of the battery pack, the BMS may update the setting value of the battery pack with the change request value User2. In one or more embodiments, the user value User set in the battery pack may be updated.

According to the disclosure, even if a battery pack produced to be mounted on an existing set A is mounted on a new set C, a setting value of the battery pack may be changed with a setting value corresponding to the set C, thereby using the existing battery pack without re-production of the battery pack, etc.

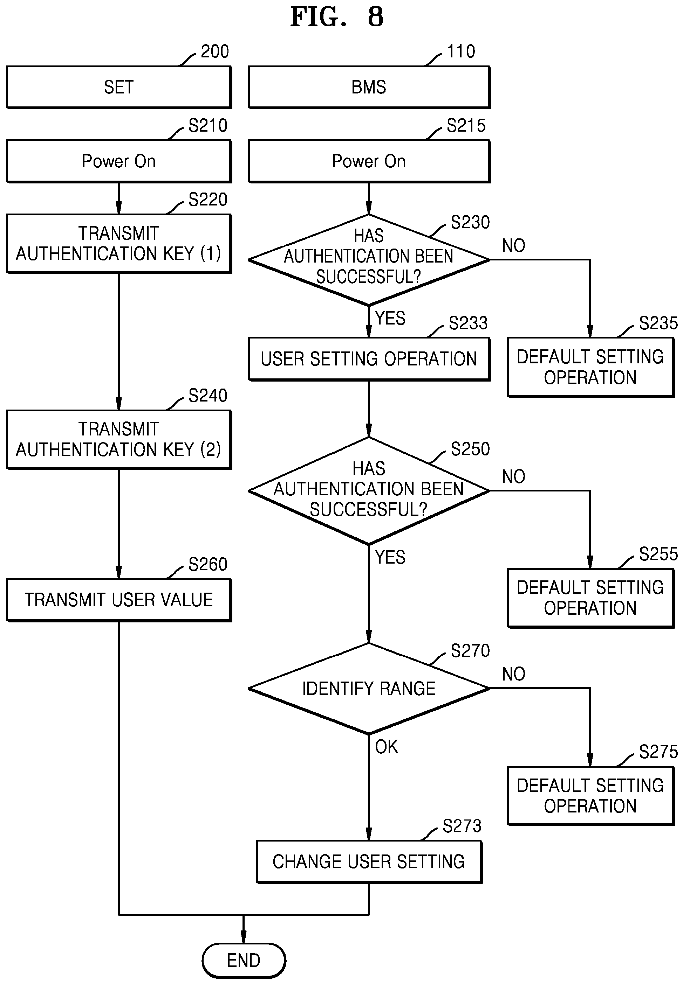

FIG. 8 is a flowchart of a method of changing a battery-setting value, according to other embodiments of the disclosure.

Referring to FIG. 8, in operations S210 and S215, the set 200 including the battery pack and the BMS 110 included in the battery pack may be powered on. For example, if the set 200 or the BMS 110 is powered on after being off, the set 200 or the BMS 110 may perform a set-authenticating operation.

In operation S220, the set 200 may transmit the first authentication key to the BMS 110. In operation S230, the BMS 110 may attempt to authenticate the set 200 based on the first authentication key received from the set 200, and may determine whether the authentication has been successful. For example, the operation of the battery pack may have a function having settings that are not changeable by the set 200, and may have a function having settings that are changeable by the set 200. If the settings are changeable by the set 200, the BMS 110 may have setting values (e.g., Min, Max, Default, User) for the operation of the battery pack. In one or more embodiments, an initial value of the user value User may be equal to the default value Default, and the user value User may be updated with a value within a setting value range by the set 200.

For example, if the set 200 has four discharge modes, each having a temperature-protection-setting value, and if the set A raises a power of each discharge mode, the BMS 110 may adjust a temperature-protection-setting value (e.g., a set B operates with a default value).

In operation S233, if the BMS 110 authenticates that the battery pack is connected to the set A, the BMS 110 may control the battery pack to operate with the user value (e.g., preset user value) User. In operation S235, if the BMS 110 fails to authenticate that the battery pack is connected to the set A (for example, the battery pack is connected to the set B), the BMS 110 may control the battery pack to operate with a default value (e.g., preset default value) Default. According to the disclosure, one battery pack may be used in several sets through a set authenticating function.

The BMS 110 according to embodiments of the disclosure may perform a change process after authentication to reduce or prevent the likelihood of the setting value of the battery pack being changed by a random set (fake SET). In operation S240, the set 200 may transmit, to the BMS 110, the second authentication key requesting the change of the setting value of the battery pack.

The BMS 110 may change the setting value of the battery pack if it is determined that authentication of the second authentication key has been successful in operation S250. In operation S255, the BMS 110 may control the battery pack to operate with the default value (e.g., preset default value) Default if it is determined that the authentication of the second authentication key has failed in operation S250.

In operation S260, the set 200 may transmit the change request value requesting the change of the setting value of the battery pack to the BMS 110. In operation S270, the BMS 110 may determine whether the change request value received from the set 200 is within the setting value range of the battery pack.

In operation S273, if the change request value transmitted from the set is within the setting value range (Min to Max), the BMS 110 may determine whether interconnected other values do not conflict, and may change the setting value. For example, the BMS 110 may issue the first authentication key to the set if the setting value is changed with the change request value, at the request of the set 200.

In operation S275, the BMS 110 may control the battery pack to operate with the default value (e.g., preset default value) Default if it is determined in operation S270 that the change request value transmitted from the set is outside of the setting value range (Min to Max).

According to the disclosure, the setting values (the protective-operation-setting value, the output, etc.) of the battery pack may be safely changed for operation specifications of the set. According to the disclosure, the setting value for the operation of the battery pack may be changed by a request of the set.

The various embodiments described above are illustrative and are not to be independently implemented separately from each other. Embodiments described herein may be implemented in combination with each other.

Various embodiments of the disclosure may be implemented in the form of a computer program executable on a computer through various components, and the computer program may be recorded on a computer-readable medium. The medium may continuously store an executable program or temporarily store the same for execution or downloading. The medium may include various recording means or storage means in a form of single hardware or a combination of several hardware, and may be distributed over a network without being limited to a medium directly connected to a certain computer system. In one or more embodiments, the medium may include a magnetic medium, such as a hard disk, a floppy disk, and a magnetic tape, an optical recording medium, such as a CD-ROM and a DVD, a magneto-optical medium, such as a floptical disk, ROM, RAM, flash memory, etc., to store a program instruction. In one or more other embodiments, the medium may include a recording medium or a storage medium managed by an app store that distributes applications, a site that supplies or distributes various software, a server, etc.

In the specification, the term "unit", "module", etc., may be a hardware component like a processor or a circuit, and/or a software component executed by a hardware component like a processor. For example, "unit", "module", etc., may be implemented by components, such as software components, object-oriented software components, class components, and task components, processes, functions, properties, procedures, subroutines, segments of program code, drivers, firmware, microcode, circuits, data, a database, data structures, tables, arrays, and variables.

Those of ordinary skill in the art to which the disclosure pertains will appreciate that the disclosure may be implemented in different detailed ways without departing from the technical scope or essential characteristics of the disclosure. The aforementioned embodiments of the disclosure should be construed as being only illustrative, but should not be constructed as being restrictive from all aspects. For example, each element described as a single type may be implemented in a distributed manner, and likewise, elements described as being distributed may be implemented as a coupled type.

According to the disclosure, a method and apparatus for effectively changing a setting value of a battery pack, and a recording medium storing a computer program to execute the method are provided. However, the scope of the disclosure is not limited by these effects.

It should be understood that embodiments described herein should be considered in a descriptive sense only and not for purposes of limitation.

## Claims

1. A method of changing a setting value of a battery pack (100) provided in a set (200), the method comprising:
obtaining, by a battery management system, BMS, (110) of the battery pack (100), a first authentication key from the set (200);
authenticating, by the BMS (110), the set (200) based on the first authentication key;
changing, by the BMS (110), a setting value for an operation of the battery pack (100) with a value based on whether the set (200) is authenticated;
**characterized by**
receiving, by the BMS (110), a second authentication key requesting a change of the setting value from the set (200); and
changing, by the BMS (110), the setting value based on a change request value (User2) received from the set (200) in response to whether the second authentication key is identified,
wherein the changing of the setting value based on the change request value (User2) comprises:
determining whether the change request value (User2) is within a range between a minimum value (Min) and a maximum value (Max) of the setting value; and
changing the setting value if the change request value (User2) is within the range.

2. The method as claimed in claim 1, wherein the authenticating of the set (200) comprises:
identifying the first authentication key indicating mutual authentication between the set (200) and the BMS (110); and
identifying the set (200) based on the first authentication key.

3. The method as claimed in claim 1 or 2, wherein the changing of the setting value comprises:
identifying the first authentication key, and changing, by the BMS (110), the setting value with a user value (User) corresponding to the set (200); or
failing to identify the first authentication key, and changing, by the BMS (110), the setting value with a default value.

4. The method as claimed in any one of the preceding claims, wherein the changing of the setting value based on the change request value (User2) further comprises updating a user value corresponding to the set (200) with the change request value (User2).

5. A recording medium having recorded thereon a computer program to execute on a battery management system the method as claimed in in any one of the preceding claims.

6. An apparatus for changing a setting value of a battery pack (100) provided in a set (200), the apparatus comprising a battery management system, BMS, (110) for the battery
pack (100) that is configured to obtain a first authentication key from the set (200), to authenticate the set (200) based on the first authentication key, to change the setting value for an operation of the battery pack (100) with a value based on whether the set (200) is authenticated, **characterized in that** the BMS is further configured to receive a second authentication key requesting a change of the setting value
from the set (200), to change the setting value based on a change request value (User2) received from the set (200) in response to whether the second authentication key is identified, to determine whether the change request value (User2) is within a range between a minimum value (Min) and a maximum value (Max) of the setting value, and to change the setting value if the change request value (User2) is within the range.

7. The apparatus as claimed in claim 6, wherein the BMS (110) is further configured to identify the first authentication key indicating mutual authentication between the set (200) and the BMS (110), and to identify the set (200) based on the first authentication key.

8. The apparatus as claimed in claim 6 or 7, wherein the BMS (110) is further configured to identify the first authentication key and change the setting value with a user value (User) corresponding to the set (200), or to fail to identify the first authentication key and change the setting value with a default value.

9. The apparatus as claimed in any one of claims 6 to 8, wherein the BMS (110) is further configured to update a user value corresponding to the set (200) with the change request value (User2).

## Patentansprüche

1. Verfahren zur Änderung eines Sollwerts eines Batteriepacks (100), vorgesehen in einem Set (200), umfassend:
Erlangen, durch ein Batteriemanagementsystem, BMS, (110) des Batteriepacks (100), eines ersten Authentifizierungsschlüssels von dem Set (200);
Authentifizieren, durch das BMS (110), des Sets (200) basierend auf dem ersten Authentifizierungsschlüssel;
Ändern, durch das BMS (110), eines Sollwerts für einen Betrieb des Batteriepacks (100) mit einem Wert basierend darauf, ob das Set (200) authentifiziert ist;
**gekennzeichnet durch**
Empfangen, durch das BMS (110), eines zweiten Authentifizierungsschlüssels, der eine Änderung des Sollwerts von dem Set (200) anfordert; und
Ändern, durch das BMS (110), des Sollwerts basierend auf einem Änderungsanforderungswert (User2), der von dem Set (200) in Reaktion darauf empfangen wird, ob der zweite Authentifizierungsschlüssel identifiziert ist,
wobei das Ändern des Sollwerts basierend auf dem Änderungsanforderungswert (User2) Folgendes umfasst:
Bestimmen, ob der Änderungsanforderungswert (User2) innerhalb eines Bereichs von einem Minimalwert (Min) bis zu einem Maximalwert (Max) des Sollwerts liegt; und
Ändern des Sollwerts, falls der Änderungsanforderungswert (User2) innerhalb des Bereichs liegt.

2. Verfahren nach Anspruch 1, wobei das Authentifizieren des Sets (200) Folgendes umfasst:
Identifizieren des ersten Authentifizierungsschlüssels, der eine gegenseitige Authentifizierung zwischen dem Set (200) und dem BMS (110) angibt; und
Identifizieren des Sets (200) basierend auf dem ersten Authentifizierungsschlüssel.

3. Verfahren nach Anspruch 1 oder 2, wobei das Ändern des Sollwerts Folgendes umfasst:
Identifizieren des ersten Authentifizierungsschlüssels und Ändern, durch das BMS (110), des Sollwerts mit einem Benutzerwert (User) korrespondierend zu dem Set (200); oder
Fehlschlagen beim Identifizieren des ersten Authentifizierungsschlüssels und Ändern, durch das BMS (110), des Sollwerts mit einem Standardwert.

4. Verfahren nach einem der vorhergehenden Ansprüche, wobei das Ändern des Sollwerts basierend auf dem Änderungsanforderungswert (User2) ferner das Aktualisieren eines zu dem Set (200) korrespondierenden Benutzerwerts mit dem Änderungsanforderungswert (User2) umfasst.

5. Aufzeichnungsmedium mit einem darauf gespeicherten Computerprogramm zur Ausführung auf einem Batteriemanagementsystem des Verfahrens nach einem der vorhergehenden Ansprüche.

6. Vorrichtung zur Änderung eines Sollwerts eines Batteriepacks (100), vorgesehen in einem Set (200), umfassend ein Batteriemanagementsystem, BMS, (110) für das Batteriepack (100), das dazu konfiguriert ist, einen ersten Authentifizierungsschlüssel von dem Set (200) zu erlangen, das Set (200) basierend auf dem ersten Authentifizierungsschlüssel zu authentifizieren, den Sollwert für einen Betrieb des Batteriepacks (100) mit einem Wert basierend darauf zu ändern, ob das Set (200) authentifiziert ist, **dadurch gekennzeichnet, dass** das BMS ferner dazu konfiguriert ist, einen zweiten Authentifizierungsschlüssel zu empfangen, der eine Änderung des Sollwerts von dem Set (200) anfordert, den Sollwert basierend auf einem von dem Set (200) empfangenen Änderungsanforderungswert (User2) in Reaktion darauf zu ändern, ob der zweite Authentifizierungsschlüssel identifiziert ist, zu bestimmen, ob der Änderungsanforderungswert (User2) innerhalb eines Bereichs von einem Minimalwert (Min) bis zu einem Maximalwert (Max) des Sollwerts liegt, und den Sollwert zu ändern, falls der Änderungsanforderungswert (User2) innerhalb des Bereichs liegt.

7. Vorrichtung nach Anspruch 6, wobei das BMS (110) ferner dazu konfiguriert ist, den ersten Authentifizierungsschlüssel zu identifizieren, der eine gegenseitige Authentifizierung zwischen dem Set (200) und dem BMS (110) angibt, und das Set (200) basierend auf dem ersten Authentifizierungsschlüssel zu identifizieren.

8. Vorrichtung nach Anspruch 6 oder 7, wobei das BMS (110) ferner dazu konfiguriert ist, den ersten Authentifizierungsschlüssel zu identifizieren und den Sollwert mit einem Benutzerwert (User) korrespondierend zu dem Set (200) zu ändern, oder das Identifizieren des ersten Authentifizierungsschlüssels fehlschlagen zu lassen und den Sollwert mit einem Standardwert zu ändern.

9. Vorrichtung nach einem der Ansprüche 6 bis 8, wobei das BMS (110) ferner dazu konfiguriert ist, einen zu dem Set (200) korrespondierenden Benutzerwert mit dem Änderungsanforderungswert (User2) zu aktualisieren.

## Revendications

1. Procédé de modification d'une valeur de réglage d'un bloc-batterie (100) fourni dans un ensemble (200), le procédé comportant :
l'obtention, par un système de gestion de batterie, BMS, (110) du bloc-batterie (100), d'une première clé d'authentification de l'ensemble (200) ;
l'authentification, par le BMS (110), de l'ensemble (200) sur la base de la première clé d'authentification ;
la modification, par le BMS (110), d'une valeur de réglage pour une opération du bloc-batterie (100) avec une valeur sur la base du fait que l'ensemble (200) est authentifié ou non ;
**caractérisé par** la réception, par le BMS (110), d'une deuxième clé d'authentification demandant une modification de la valeur de réglage à partir de l'ensemble (200) ; et
la modification, par le BMS (110), de la valeur de réglage sur la base d'une valeur de demande de modification (User2) reçue de l'ensemble (200) en réponse au fait que la deuxième clé d'authentification est identifiée ou non,
dans lequel la modification de la valeur de réglage sur la base de la valeur de demande de modification (User2) comporte :
le fait de déterminer si la valeur de demande de modification (User2) se situe dans une plage entre une valeur minimale (Min) et une valeur maximale (Max) de la valeur de réglage ; et
la modification de la valeur de réglage si la valeur de demande de modification (User2) se situe dans la plage.

2. Procédé selon la revendication 1, dans lequel l'authentification de l'ensemble (200) comporte :
l'identification de la première clé d'authentification indiquant une authentification mutuelle entre l'ensemble (200) et le BMS (110) ; et
l'identification de l'ensemble (200) sur la base de la première clé d'authentification.

3. Procédé selon la revendication 1 ou 2, dans lequel la modification de la valeur de réglage comporte :
l'identification de la première clé d'authentification, et la modification, par le BMS (110), de la valeur de réglage avec une valeur utilisateur (User) correspondant à l'ensemble (200) ; ou
l'absence d'identification de la première clé d'authentification, et la modification, par le BMS (110), de la valeur de réglage avec une valeur par défaut.

4. Procédé selon l'une quelconque des revendications précédentes, dans lequel la modification de la valeur de réglage sur la base de la valeur de demande de modification (User2) comporte en outre la mise à jour d'une valeur utilisateur correspondant à l'ensemble (200) avec la valeur de demande de modification (User2).

5. Support d'enregistrement sur lequel est enregistré un programme informatique pour exécuter sur un système de gestion de batterie le procédé selon l'une quelconque des revendications précédentes.

6. Appareil de modification d'une valeur de réglage d'un bloc-batterie (100) fourni dans un ensemble (200), l'appareil comportant un système de gestion de batterie, BMS, (110) pour le bloc-batterie (100) qui est configuré pour obtenir une première clé d'authentification de l'ensemble (200), pour authentifier l'ensemble (200) sur la base de la première clé d'authentification, pour modifier la valeur de réglage pour une opération du bloc-batterie (100) avec une valeur sur la base du fait que l'ensemble (200) est authentifié ou non, **caractérisé en ce que** le BMS est en outre configuré pour recevoir une deuxième clé d'authentification demandant une modification de la valeur de réglage à partir de l'ensemble (200), pour modifier la valeur de réglage sur la base d'une valeur de demande de modification (User2) reçue de l'ensemble (200) en réponse au fait que la deuxième clé d'authentification est identifiée ou non, pour déterminer si la valeur de demande de modification (User2) se situe dans une plage comprise entre une valeur minimale (Min) et une valeur maximale (Max) de la valeur de réglage, et pour modifier la valeur de réglage si la valeur de demande de modification (User2) se situe dans la plage.

7. Appareil selon la revendication 6, dans lequel le BMS (110) est en outre configuré pour identifier la première clé d'authentification indiquant une authentification mutuelle entre l'ensemble (200) et le BMS (110), et pour identifier l'ensemble (200) sur la base de la première clé d'authentification.

8. Appareil selon la revendication 6 ou 7, dans lequel le BMS (110) est en outre configuré pour identifier la première clé d'authentification et modifier la valeur de réglage avec une valeur utilisateur (User) correspondant à l'ensemble (200), ou pour ne pas identifier la première clé d'authentification et modifier la valeur de réglage avec une valeur par défaut.

9. Appareil selon l'une quelconque des revendications 6 à 8, dans lequel le BMS (110) est en outre configuré pour mettre à jour une valeur utilisateur correspondant à l'ensemble (200) avec la valeur de demande de modification (User2).
